# EUROPEAN PATENT SPECIFICATION

(11) **EP 2 583 076 B1**
(45) Date of publication and mention of the grant of the patent: **26.12.2018**
(21) Application number: 11740730.4
(22) Date of filing: 16.06.2011
(51) Int. Cl.: G01M 5/00, G01M 11/08

(54) **SYSTEM FOR MEASURING AND MONITORING THE STRAIN ON OBJECTS STRESSED BY EXTERNAL FORCES**
SYSTEM ZUM MESSEN UND ZUR ÜBERWACHUNG DES SPANNUNGSZUSTANDES DER VON AUSSEREN KRÄFTE BELASTETEN OBJEKTEN.
SYSTÈME POUR MESURER ET SURVEILLER LA DÉFORMATION SUR DES OBJETS DÉFORMÉS PAR DES FORCES EXTERNES

(30) Priority: 18.06.2010 IT RM20100333
(43) Date of publication of application: 24.04.2013
(73) Proprietor: Persi Del Marmo, Paolo, 00187 Roma (IT)
(72) Inventor: Persi Del Marmo, Paolo, 00187 Roma (IT)
(74) Representative: Santi, Filippo
(86) International application number: PCT/IT2011/000203
(87) International publication number: WO 2011/158273

(56) References cited:
- WO-A1-2008/115375
- WO-A2-2008/021881
- US-A1- 2004 083 808
- US-B1- 6 597 822
- US-B1- 7 512 502
- US-B1- 7 520 176

## Description

The present invention concerns the technical field of measurement and monitoring of strain of objects, and makes reference to a system for measuring and monitoring strains of an object stressed by one or more outer forces.

As far as the present invention is concerned, said object has discrete mass and dimensions, while objects having point mass and dimensions are not included.

At present, devices are known for measuring strains of an object, such as electric or mechanical extensometers.

A first drawback of said devices is that both electrical and mechanical extensometers have a low resolution, as well as a low dynamic and low precision.

A second drawback is that said electrical and mechanical extensimeters are affected by electromagnetic noise.

A third disadvantage is that both electrical and mechanical extensimeters are not stable.

Another drawback is that said electrical and mechanical extensimeters are subjected to corrosion.

Still another drawback is that electrical and mechanical extensimeters are cannot be used for uses providing contact with liquids.

A known system for measuring strain of objects is described in the International Patent Application WO 2008/115375, filed on March 12, 2008. Said system is comprised of a tube containing inside a plurality of optical fibers with Bragg or Rayleigh sensors, measuring strain to which it is subjected when it receives a force. Particularly, neutral axis, i.e. axis along which applied force has no deformation effect on optical sensors, is tube central axis and fibers are applied on inner surface of same tube so that distance between them and said central axis is the same. In other words, tube is an instrument for measuring strains of the same.

A drawback is due to the fact that it is not possible measuring strains of an object different from the same tube, since fibers within the tube are about the neutral axis coinciding with tube central axis, and not with the neutral axis of the object the strain of which should be measured. Thus, if said system would be applied on any object, it would not be able to measure real strain of the object, but strain transmitted to the tube by the object and that is measured with respect to neutral axis of same tube. Therefore, measured strain would only be a fraction of real strain to which the object on which tube is applied has been subjected.

A second drawback is that assumption on which measurement of each strain is made is that strain is uniform. This means that if object undergoes not uniform strains, they are properly measured.

Still another drawback is that said system does not permit measuring torsions of the object on which it is applied, due to positioning of fibers along inner tube surface.

A further drawback is due to the remarkable number of sensors used, making said measurement very expensive.

Another known system is described in International Patent Application WP2008/021881. Said system is comprised of a flexible support structure and of a line of sensors connected each other for mechanically measuring strains, said line being coupled with said support structure so as to create a zigzag path. Particularly, said support structure is wound around a cylindrical object.

A drawback of said solution is that it is designed only for measuring strain of objects having a cylindrical shape.

Still another drawback is that it is not possible measuring compression and expansion of the cylindrical object along its longitudinal axis, since sensor positioning permits determining only a fraction of said compression or expansion.

A further drawback is due to structural complexity of the system and to manufacturing costs, since the system comprises a relevant number of sensors.

It is the object of the present invention that of overcoming said drawbacks, providing a system for measuring and monitoring strains of an object stressed by one or more outer forces, along a plane or a space, said system having high resolution, dynamic and precision.

It is therefore specific object of the present invention a System for measuring and monitoring strains of a two- or tri-dimensional object, comprising:
- at least one group of optical sensors to be applied on said object according to a predetermined geometric configuration, said at least one group comprising a number of sensors at least equal to the number of dimensions of said object, each of said optical sensors being provided within at least one fiber optic cable,
- an optical interrogator machine for generating a light signal at a given frequency to be sent in said at least one fiber optic cable, and for receiving response signals from said optical sensors and for determining the wavelength's displacement of said optical sensors from their nominal value or calibration value determined at the time of fixing the fiber optic cable on the object itself when it is in rest condition, i.e. when said object is not subjected to any to any external force; and
- a computer for calculating the object's strain with respect to at least one of two or three reference axes X, Y and Z; said computer being connectable to said interrogator machine and receiving data concerning the displacement's wavelength of each of said optical sensors with respect to their calibration values.

According to the invention, when the object is three dimensional, said at least one group of optical sensors comprise at least three optical sensors applied on said object so that they form on a same reference plane a triangular shape, in particular a plurality of groups of at least three optical sensors, each of which is disposed on a respective reference plane.

Still according to the invention, it is possible providing at least a further optical sensor applied in a plane perpendicular to the reference plane of each group of at least three optical sensors and is inclined with respect to the object torsion axis, preferably at 45° respect to said axis.

Furthermore, according to the invention, when the object is two-dimensional, said at least one group of optical sensors comprises at least two optical sensors; said at least two optical sensors being applied on a first object surface, each provided at the free end of the arms of an imaginary line substantially L-shaped, particularly a plurality of groups of at least two optical sensors is provided on said first surface.

Advantageously, according to the invention, for each group of two optical sensors is provided a at least a further optical sensor located at the junction between the two branches of said line so as to be inclined with respect to the object torsion axis, preferably at 45° with respect to said axis.

According to the invention, on the second surface of the object, opposite to said first surface on which at least a first group of optical sensors is provided, at least a first group of at least two optical sensors is provided; said at least two optical sensors being applied to the free end of each arm of an imaginary line substantially L-shaped, so that each optical sensor of said at least one group on said second surface is mirror image of a respective optical sensor of said at least one group on the first surface of the object.

Preferably, optical sensors in each group are placed at maximum distance from the neutral axis.

In a first embodiment, it is possible providing that each of said optical sensors is in a respective fiber optic cable, in particular said cables are connected to form an optical fiber chain, said optical fiber chain being connected to the optical interrogator machine with an optical connector. In a second embodiment, said fiber optic cables are connectable to the machine interrogative optical with a corresponding optical connector.

According to the invention, optical sensors are made using a fiber optic cable portion that is modified so that said fiber optic cable portion has a different refractive index from the rest of the fiber optic cable.

It is also object of the invention a method for measuring and monitoring strains of a two- or tri-dimensional object subjected to one or more external forces using the system in any one of the preceding claims, which method comprises the following steps:
a) providing at least one group of optical sensors comprising at least one number of sensors equals to the number of dimensions of said object to be applied on said object in at least one optical fiber cable;
b) placing and gluing said at least one group of optical sensors on said object according to a predetermined geometric configuration;
c) connecting said at least one fiber optic cable to an optical interrogator machine;
d) sending a light signal from said optical interrogator machine to said at least one fiber optic cable with consequent impact of said light signal with each of the optical sensors of said at least one group;
e) sending a response signal from each of said optical sensors to the optical interrogator machine;
f) receiving from the optical interrogator machine said response signals sent from each of said optical sensors;
g) calculating, by said optical interrogator machine, the measure of strain defined as the difference of the value of the wavelength of each optical sensor after deformation of the object and the calibration value of the same optical sensor, i.e. the value of the wavelength of the optical sensor fixed at the time of fixing the fiber optic cable on the object;
h) sending the measure of strain to a computer connected to said optical interrogator machine;
i) calculating the strain of said object by said computer with respect to the each external force application axis on said object.

According to the invention, when the object is three-dimensional, step a) of said method provides application of at least a group of three optical sensors, particularly application on said object of a plurality of groups of three optical sensors.

Advantageously, step a) can provide application of at least a further optical sensor for each group on said object.

Still according to the invention, step b) of said method provides positioning and gluing of each group of three optical sensors on said object according to a triangular geometrical arrangement, each group on a relevant reference plane.

Further, step b) can provide positioning and gluing for each group of at least a further optical sensor on a plane orthogonal with respect to each reference plane and inclined with respect to the object torsion plane, preferably with a 45° angle.

According to the invention, when the object is a two-dimensional one, step a) application of at least a group of two optical sensors on a first surface of said object, particularly step a) can provide application of a plurality of groups of two optical sensors on said first surface.

Still according to the invention, step a) of said method can comprise one or more groups of at least to optical sensors on the second surface, opposed with respect to the first surface.

Advantageously, step a) can provide at least a further sensor for each group of optical sensors.

According to the invention, step b) provides positioning and gluing each group of at least two optical sensors on said first surface according to a substantially L-shaped arrangement, wherein said at least to optical sensors are positioned at free ends of the two arms of said L shape.

Advantageously step b) can provide positioning and gluing one or more group of at least two optical sensors on said first surface according to a substantially L-shaped arrangement. Said at least to optical sensors are positioned at free ends of the two arms of said L shape, and each group of at least two optical sensors is a mirror image with respect to a relevant group of at least two sensors on the first surface of the object.

Step b) can provide positioning and gluing of at least a further sensor on said first surface or on said second surface where arms of said L shape meet, preferably 45° inclined with respect to said axis.

Finally, according to the invention, each optical fiber cable can be applied on outer surface of the object or inside the same. In the latter case, insertion of each optical fiber cable within the object directly occurs while manufacturing the object, provided that temperature limit beyond which optical fiber material losses its features or breaks is not passed.

The present will be no described for illustrative, but not limitative purposes, according to an embodiment, with particular reference to the enclosed drawings, wherein:
figure 1 is a perspective view of a three-dimensional object on hic a group of three optical sensors is applied;
figure 2 is a cross-section of the object of figure 1 in correspondence of the plane on which the three optical sensors are applied;
figure 3 shows the object of figure 1 on which a fourth optical sensor has been applied;
figure 4 is a cross-section of the object of figure 3 in correspondence of the plane on which the four optical sensors are applied;
figure 5 shows the object of figure 1 on which a further group of three optical sensors has been applied;
figure 6 shows the object of figure 3 on which a further group of four optical sensors has been applied;
figure 7 shows a to-dimensional object with a group of two optical sensors applied on the upper surface;
figure 8 shows the object of figure 7 with a plurality of groups of to optical sensors on the upper surface;
figure 9 shows object of figure 7 with a group of two optical sensors on the inner surface which is a mirror image with respect to the one provided on the upper surface;
figure 10 shows the object of figure 9 with a plurality of groups of two optical sensors on the upper surface of the object and corresponding groups of to optical sensors on the lower surface, each one a mirror image with respect to a relevant group on the upper surface;
figure 11 shows a two-dimensional object with a group of three optical sensors on the upper surface;
figure 12 shows the object of figure 11 with two groups of three optical sensors on its upper surface.

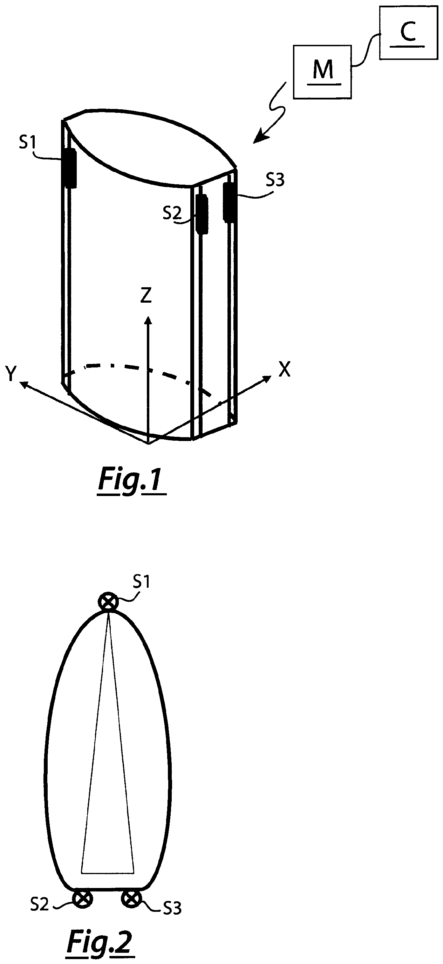

Making reference to figures 1-2, a system is provided in the described embodiment for measuring and monitoring strains within the space to which a three-dimensional object is subjected by an outer force, said system comprising:
- a group of three optical sensors, comprised of a first optical sensor S1, of a second optical sensor S2 and of a third optical sensor S3, to be applied on the outer surface of said object so as to realize an isosceles triangle on an X, Y reference plane; said optical sensors S1, S2, S3 being within a fiber cable;
- an optical interrogator machine M for generating a light signal at a given frequency to be sent in said fiber optic cable, and for receiving response signals from said optical sensors S1, S2, S3 and for determining the wavelength's displacement of said optical sensors from their nominal value or calibration value determined at the time of fixing the fiber optic cable on the object itself when it is in rest condition, i.e. when said object is not subjected to any to any external force; said interrogator machine M being couplable with said optical fiber cable by an optical connector (not shown) and
- a computer C for calculating the object's strain with respect to at least one of two or three reference axes X, Y and Z, said computer C being connectable to said interrogator machine M and receiving from the same data concerning the displacement's wavelength of each of said optical sensors S1, S2, S3 with respect to their calibration values.

As already said, although geometrical arrangement of optical sensors shown in the figures is an isosceles triangle, triangle realized by said three optical sensors can be any triangle, even an equilateral or rectangular triangle, or any scalene triangle, the heights of which extend from a vertex up to being between vertexes of the opposed side.

In other words, it is preferred that each height of the triangle is a segment extending from a vertex, close to which an optical sensor is provided, up to contacting the side opposed with respect to said vertex, close to the ends of which two optical sensors are provided.

As already said, although not shown in the figures, it is possible providing that each one of said optical sensors is provided within a relevant optical fiber cable, and that said optical fiber cables are connected each other realizing an optical fiber chain, and the latter is connected with the machine by an optical connector (not shown).

As an alternative, said optical sensors can be connected independently each other with the interrogator machine M by a relevant optical cable.

Optical sensors are realized by a portion of optical fiber cable long about 2 cm, modified so as to provide to said optical fiber cable portion a particular refraction index differentiating the same from the other portion of the optical fiber cable, thus making said portion discernible with respect to the cable. Therefore, optical sensor only is a portion of the optical fiber cable characterized by a refraction index which is different with respect to the other parts of the optical fiber cable.

Said optical sensors are usually known as Bragg sensors or sensors based on Bragg reticule.

Further, as already mentioned, each optical fiber cable can be provided within the structure of said object, rather than being applied on its outer surface. Advantageously, in this case, it is possible realizing an object already providing optical fiber cables, provided that limit of temperature beyond which optical fiber material losses its features or breaks.

To have a better reading of object strain, it is preferred that said optical sensors S1, S2, S3 are provided at the maximum distance from the neutral axis, i.e. the axis along which applied force has no straining effects on optical sensors.

In the described example, axis Z is the neutral axis with respect to forces along axes X and Y.

In case a compression is applied, axis Z is axis along which force is applied, since it is the vertical axis.

Once connected optical fiber cable with interrogator machine M, optical sensors S1, S2, S3 within said optical fiber cable are stressed by light signal sent from said optical interrogator machine M.

Said sensors S1, S2, S3 respond with their characteristic refraction, i.e. each optical sensor reflects to said interrogator machine a signal with its wavelength, in case the object is not subjected to any force, or they refract light at a wavelength close to the characteristic wavelength, in case object on which said optical sensors are applied is subjected to at least one force.

Amplitude of interval about the characteristic wavelength depends on wavelength distance between the optical sensors employed.

According to the invention, minimum distance between one optical sensor and the other one is a wavelength of 1nm.

Characteristic wavelength used to characterized the optical fiber cable can vary within the range between 1510 nm and 1590 nm.

This means that if e.g. 80 sensors are provided at a wavelength distance of 1 nm each other, maximum is around 1nm ± 0.5 around the characteristic wavelength.

Triangular position of optical sensors S1, S2, S3 permits discerning components of strain along reference axes X, Y and Z.

Particularly, to measure strains along axis X, pair of sensors on the basis of the triangle is used, i.e. second S2 and third S3 optical sensors.

Computer C makes, for each one of said optical sensors S1, S2, S3, a differential measurement between two wavelength values, i.e. the optical sensor calibration value and the value after the strain on the same optical sensor.

Said wavelength differential measurement is related to the object dimensions, transformed into metrical scale, e.g. a lengthening or shortening can be indicated by meters.

The same strain measurement can be transformed into different measurement units, such as bar, degrees, Celsius degrees, with reference to the specific measurement carried out. For example, a compression can be indicated by bar, a torsion by degrees, and a temperature by Celsius degrees.

In other words, differential measurement carried out by interrogator machine M is ε=ΔL/L, wherein ΔL is length variation of optical sensor (unknown parameter) and L is the point where optical sensor is applied with respect to a reference plane (known parameter). In the present case, reference plane is XY at the basis of the object. Therefore, parameter L represents height where sensor is placed.

In order to determine ΔL it is sufficient multiplying differential measurement ε by L value defined by height of application of the sensor with respect to the reference plane.

Said differential measurement ε must be made for each optical sensor, so as to determine ΔL variations for each optical sensor S1, S2, S3.

Once set variation of ΔL for each optical sensor S1, S2, S3, to individuate different strain components along three axes X, Y, Z, differential measurement is carried out between three pairs of sensors: a first pair is the one comprising optical sensor S1 and optical sensor S2, the second one that comprising optical sensors S1 and S3, and the last one S2 and S3.

Compression vertical component of each pair along axis Z is annulled and permit obtaining strain component along axes X and Y.

Measurement difference between optical sensor S2 and optical sensor S3 (thus ε₂-ε₃=(ΔL₂/L₂-ΔL₃/L₃)=(λ₂-λ₀₂)-(λ₃-λ₀₃)) determines only strain component along axis X since in differential calculation compression component along axis Z and strain component along axis Y annul each other, since they have the same value for two optical sensors S2 and S3, thus only remaining said strain component.

One of the two sensors pairs is used to measure strain along axis Y, each one comprised of an optical sensor provided on the basis of the triangle and of optical sensor s1 on upper vertex of triangle.

In other words, for measuring strain along axis Y it can be used a first pair comprised of second optical sensor S2 and of first optical sensor S1, or a second pair comprised of third optical sensor S3 and first optical sensor S1.

In case first pair of optical sensors is used, difference of measurement between optical sensor S2 and optical sensor S1 (thus ε₂-ε₁=(ΔL₂/L₂-ΔL₁/L₁)=(λ₂-λ₀₂)-(λ₁-λ₀₁)) determines the sole strain component along axis Y. In fact, in differential calculation, compression component along axis Z and strain component along axis X annul each other, since they have the same value for both optical sensors S2 and S1, thus only remaining strain component along axis Y.

Same strain component can be calculated by using second pair of optical sensors, and thus calculating difference between optical sensor S3 and optical sensor S1 (thus ε₃-ε₁=(ΔL₃/L₃-ΔL₁/L₁)=(λ₃-λ₀₃)-(λ₁-λ₀₁)).

Therefore, it is sufficient subtracting deformation along axis X and along axis Y to the total strain value measured by each one of said optical sensors S1, S2, S3, to precisely calculate compression component along axis Z.

In other words, the above represents a system comprising three equations and three unknowns that can be solved since information ΔL are available from said three sensors.

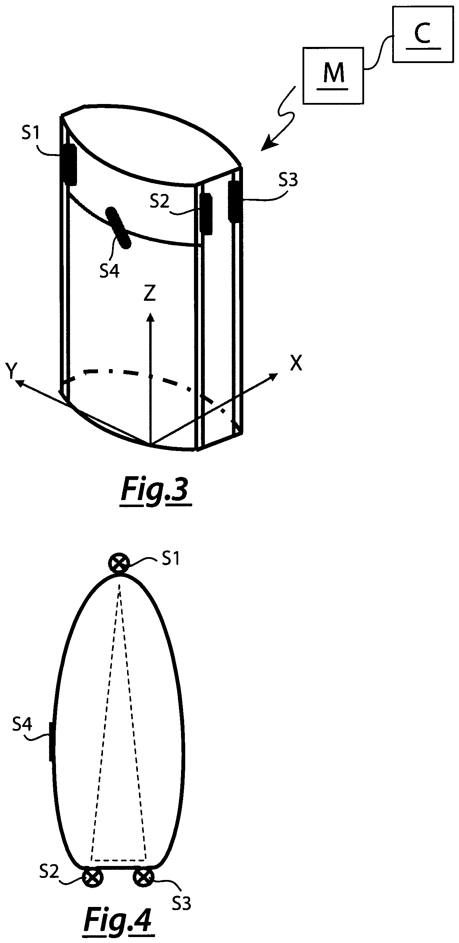

Torsion of object can be measured by providing adding a fourth optical sensor S4 to the group of sensors already applied on the object (figures 3 and 4).

It is well evident that said fourth optical sensor S4 must be connected to the interrogator machine by an optical fiber cable that can be the same cable in within which three optical sensors S1, S2, S3 are inserted, or a further optical fiber cable.

Said fourth sensor S4 is provided along a ZY plane, perpendicular to the plane XY.

Particularly, said fourth sensor S4 is positioned on outer surface of the object, with an angle of 45° with respect to the axis about which torsion occurs, specifically axis Z.

As already said, although fourth optical sensor S4 is in the figure inclined of 45° with respect to the object torsion axis, said fourth sensor can have any inclination with respect to said axis without limiting the scope of the invention.

Torsion effect is identified by a diagonal strain vector usually measured employing four sensors provided at 90° each other, thus realizing a cross, and with a 45° inclination with respect to the axis about which torsion occurs, in the specific case axis Z.

Four sensors are necessary to discriminate torsion components of other strains, such as for example a compression.

Torsion force generates a spiral type strain.

Taking into consideration single transverse sections of the object taken along an XY plane at different heights, it is possible observing that effect of twisting force is that of applying a tangential force to the different sections thus causing a different rotation for each single section with respect to those adjacent and a dilatation along direction which is a mirror image with respect to the torsion axis.

Taking into consideration the section coincident with the twisting force application point, said section will be subjected to the maximum rotation that can be measured along the object. Also the underlying section will be subjected to a target force that will create a displacement that will be lower than the displacement of the section above, and so on always lower descending along the torsion axis of the object until reaching the section where twisting effect will be finished and therefore no rotation will occur.

Thus, effect of a twisting force can be represented by a spiral.

In the system according to the invention, in order to determine torsion to which the object is subjected it is sufficient adding an optical sensor S4 along a diagonal line, i.e. with an inclination of 45° with respect to the torsion axis.

Said optical sensor S4 measures strain component projected along its direction, while vertical compression component is determined by optical sensors S1, S2, S3.

Although optimum positioning for measuring torsion rotation component is the one along the vertical line, in this arrangement optical sensor S4 would not be linearly independent with respect to other optical sensors S1, S2 and S3, and therefore it would not be possible discriminate compression component due to torsion.

Thus, optimum solution is that providing positioning fourth optical sensor S4 with an inclination of 45°, so as to read a part of the torsion effect, i.e. component along 45° direction, making measurement linearly independent with respect to measurements of other three optical sensors, thus discriminating torsion compression component with respect to measurements made by optical sensors S1, S2, S3.

Therefore, by a group of four sensors it is possible measuring both strain and torsion to which the object is subjected. In this case, a linear system is obtained of four equations and four unknowns that can be solved, since ΔL from all four sensors is available.

According to the invention, it is also possible obtaining object strain profile along three reference axis X, Y and Z.

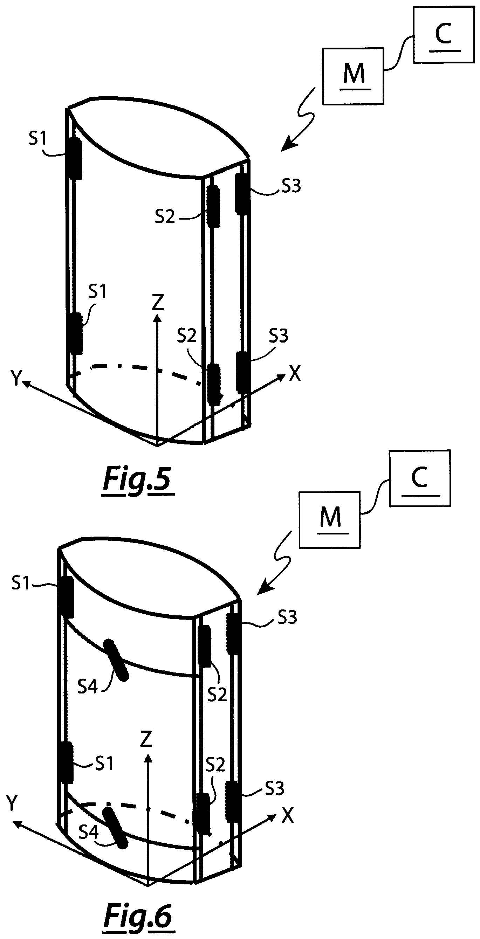

In order to determine strain profile along three reference axis X, Y, Z, one or more further groups of optical sensors are applied on the object at a height different with respect to the other group, i.e. along a relevant X, Y reference plane, where optical sensors of each further group are aligned with optical sensors of the group already applied on the object (fig. 5).

In order to obtain said strain profile, it is necessary mathematically interpolate data from sensors of each group along with coordinates of points defining position of optical sensors off each group.

Grade of interpolation function to be used to determine said strain profile can be compared with number of groups of optical sensors applied on outer surface of the object.

Instead, to determine torsion profile, one or more further groups of four optical sensors are applied on the object (fig. 6).

In view of the above, computer C receives data sent from interrogator machine M and relevant to wavelength of each sensor applied on the object, makes differential measurements between wavelength of each optical sensor, before and after application of an outer force, transforms results of said differential measurements into linear displacement of the object.

Further, it is possible determining profile of strains to which object is subjected by employing an interpolation function, preferably with a grade corresponding to the number of groups of sensors applied on the object, taking into consideration the position of each optical sensor.

In the example described, optical sensors and optical fiber cable are glued on the outer surface of the object.

A specific glue to be used to glue said optical fiber cables on the object will be chosen on the basis of the specific material.

A method for measuring and monitoring strains within a space of a tri-dimensional object subjected to one or more external comprises the following steps:
a) providing one or more groups of at least three optical sensors S1, S2, S3 to be applied on said object in at least one optical fiber cable;
b) placing and gluing each one of said optical sensors S1, S2, S3 of said one or more groups on said object according to triangular configuration;
c) connecting said at least one fiber optic cable to an optical interrogator machine M;
d) sending a light signal from said optical interrogator machine M to said one fiber optic cable with consequent impact of said light signal with each of the optical sensors S1, S2, S3;
e) sending a response signal from each of said optical sensors S1, S2, S3 to the optical interrogator machine M;
f) receiving from the optical interrogator machine M said response signals sent from each of said optical sensors S1, S2, S3;
g) calculating, by said optical interrogator machine M, the measure of strain defined as the difference of the value of the wavelength of each optical sensor after deformation of the object and that of wavelength on the same optical sensor set at the time of fixing the fiber optic cable on the object;
h) sending the measure of strain to a computer C connected to said optical interrogator machine M;
i) calculating the strain of said object by said computer C with respect to the each external force application axis on said object.

As far as step a) is concerned, said optical sensors S1, S2, S3 are contained within at least an optical fiber cable, or each one in a relevant optical fiber cable. In the latter case, optical fiber cables can be connected each other, thus creating an optical measurement chain to be connected to the interrogator machine M, or, as an alternative, can be connected independently each other to the interrogator machine M by a relevant optical condenser.

As far as step a) is concerned, for measuring object torsion, each group provides a fourth sensor S4, applied on the outer surface of the object so as to be inclined of 45° with respect to the torsion axis, i.e. axis about which strain is applied.

As far as step b) is concerned, in case a plurality of optical sensor group is applied on the object, triangles realized by optical sensors of each group must have same shape and dimension, and vertex of said angles must be aligned.

In case groups have four sensors, fourth sensor of a group must be aligned with the fourth sensor of other groups.

As far as step i) is concerned, calculation of object strains occurs interpolating linear deformation data of optical sensors placed on the same plane with information relevant to position of each sensor.

At the same time, or after step i), it is possible providing a step to obtain object deformation profile.

### TWO-DIMENSIONAL OBJECT

In case the object is a two-dimensional object, one or more groups of at least two optical sensors are applied for measuring strain.

Said at least two optical sensors are positioned on outer surface of the object, each one on free end of arms of an imaginary line substantially L-shaped.

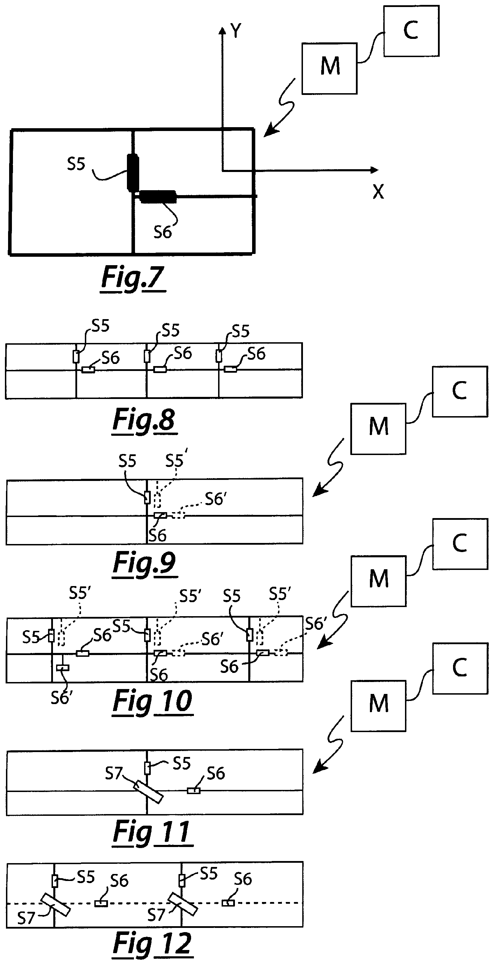

In the example shown in figure 7, for measuring strain, a group of two optical sensors S5, S6 is provided, applied on upper surface of the object having a rectangular section.

Said optical sensors S5 and S6 are placed on the same reference plane, specifically on X, Y plane.

In a first embodiment shown in figure 8, to determine profile of a strain along axis X and Y, it is possible providing adding two further optical sensor groups S5, S6 on the upper surface of the object.

In a second embodiment shown in figure 9, for measuring a shear strain, i.e. strain due to a force perpendicular to plane X, Y, a first group of two sensors S5', S6' is provided on lower surface of the object, so that each optical sensor S5', S6' of said first group on said lower surface is a mirror image of the relevant optical sensor S5, S6 of the first group placed on the upper surface.

In other words, optical sensors S5', S6' of group fixed on lower surface are provided on free ends of arms of an imaginary line substantially L-shaped, and said L-shaped line is a mirror image with respect to the L-shaped line of the upper surface.

Thus, application of a group on lower surface of the object, as a mirror image of the upper surface of the object, permits discriminating shear component with respect to strain components along axes X and Y.

In a third embodiment shown in figure 10, to determine strain profile due to a shear force, it is provided a plurality of groups of optical sensors S5, S6 on the upper surface of the object, along with a plurality of optical sensors S5', S6' on the lower surface of the same, each one being a mirror image or a respective group provided on the upper surface.

Therefore, optical sensors of each group applied on lower surface are a mirror image with respect to sensors of a respective group applied on the upper surface, so as to provided further data to calculate strain along axes with respect to which it is wished calculating said strain profile.

In a fourth embodiment shown in figure 11, it is possible providing positioning of a further optical sensor S7 for measuring torsion of the object.

Said further optical sensor S7 must be positioned in correspondence of point where arms of said L-shaped line meet, inclined with respect to torsion axis, preferably inclined of 45° with respect to said axis.

Therefore, group of optical sensors applied on upper surface of the object comprises three sensors S5, S6 and S7.

In order to determine torsion profile of the object, it is provided one or more groups of three optical sensors on the same surface (fig.12).

A first advantage of the system according to the invention is that it permits precisely measuring and monitoring possible strains of an object, such as flexion and/or compression and/or dilatation as well as torsion.

A second advantage is due to the fact that application of one or more optical fiber cables on outer surface of the object involves small dimensions with respect to the traditional devices employed for measuring strains, and consequently a reduced modification of the material of the object.

A third advantage is due to the fact that said optical fiber cables can be provided on an object even covering huge distances (also hundreths of kilometers) without losing the signal.

A fourth advantage is due to the fact that said optical fiber cables are not subjected to corrosion.

Another advantage is that optical fiber cables can be used also where there is risk of fire or explosions, as well as where liquids are present.

Still another advantage is due to the fact that it is possible obtaining further size measurements from measurement of strains, such as loads, pressures, and temperature on the object, once features of the material by which the same object is comprised are known.

Another advantage is that it is possible inserting a high number of Bragg sensors, each one having its different wavelength, at the same time maintaining a much reduced intrusion with respect to the structure on which they are provided.

Particularly, it is possible determining load along a set direction, by combining measurement of strain along said set direction either with object geometry (shape and dimensions), and with Young module of the material by which the same object is comprised.

Said Young module indentifies capability o the material to deform and therefore it is important for measuring load.

Value of said Young module can be calculated during the calibration step, by applying a known load on the object and measuring strain of said object by said system.

Thus, it is possible obtaining real Young module of the object to be monitored.

Now, load measurement is an easy matter that can be put in relation with strain of the object under an operative mode.

The same can be used to measure pressure.

To measure temperature reference is made to variation of features of glass by which optical sensors are realized. When temperature varies, refraction index of optical sensor varies since intrinsic features of the glass vary according to known rules. Thus, it is possible determining temperature to which optical sensor is subjected from variation of its refraction index, appearing as a different reflection of light signal sent from optical fiber cable to interrogator machine.

Present invention has been described for illustrative, but not limitative, purposes, according to its preferred embodiments, but it is to be understood that variations and/or modifications can be introduced by those skilled in the art without departing from the relevant scope, has defined in the enclosed claims.

## Claims

1. System for measuring and monitoring strains of a two- or tri-dimensional object, comprising:
- at least one group of optical sensors, each of said optical sensors being provided within at least one fiber optic cable,
- an optical interrogator machine (M) for generating a light signal at a given frequency to be sent in said at least one fiber optic cable, and for receiving response signals from said optical sensors and for determining the wavelength's displacement of said optical sensors from their nominal value or calibration value determined at the time of fixing the fiber optic cable on the object itself when it is in rest condition, i.e. when said object is not subjected to any external force; and
- a computer (C) for calculating the object's strain with respect to at least one of two or three reference axes X, Y and Z; said computer (C) being connectable to said interrogator machine (M) and receiving data concerning the displacement's wavelength of each of said optical sensors with respect to their calibration values;
**characterized in that**
said at least one group of optical sensors is to be applied on said object according to a predetermined geometric configuration, said at least one group comprising a number of sensors at least equal to the number of dimensions of said object; at least two optical sensors being to be placed on the same plane, and
**in that**
each of said optical sensors is distant from a neutral axis of said object, said neutral axis being the axis along which a force applied to said object has no deformation effect on said optical sensors, and
**in that**
said predetermined geometric configuration being chosen in such a way that a plane passing through said neutral axis of said object passes between said two optical sensors.

2. System according to claim 1, **characterized in that** when the object is three dimensional, said at least one group of optical sensors comprises at least three optical sensors (S1, S2, S3) applied on said object so that they form on a same reference plane a triangular shape, in particular a plurality of groups of at least three optical sensors (S1, S2, S3), each of which is disposed on a respective reference plane.

3. System according to claim 2, **characterized in that** each group further comprises at least a further optical sensor (S4) applied in a plane perpendicular to the reference plane of each group of at least three optical sensors (S1, S2, S3) and is inclined with respect to the object torsion axis, preferably at 45° respect to said axis.

4. System according to claim 1, **characterized in that** when the object is two-dimensional, said at least one group of optical sensors comprises at least two optical sensors (S5, S6); said at least two optical sensors (S5, S6) being applied on a first object surface, each provided at the free end of the arms of an imaginary line substantially L-shaped, particularly a plurality of groups of at least two optical sensors (S5, S6) is provided on said first surface.

5. System according to claim 4, **characterized in that** for each group of two optical sensors (S5, S6) is provided at least a further optical sensor (S7) located at the junction between the two branches of said line so as to be inclined with respect to the object torsion axis, preferably at 45° with respect to said axis.

6. System according to any one of claims 3-5, **characterized in that** on the second surface of the object, opposite to said first surface on which at least a first group of optical sensors (S5, S6) is provided, at least a first group of at least two optical sensors (S5', S6') is provided; said at least two optical sensors (S5', S6') being applied to the free end of each arm of an imaginary line substantially L-shaped, so that each optical sensor (S5', S6') of said at least one group on said second surface is mirror image of a respective optical sensor (S5, S6) of said at least one group on the first surface of the object.

7. System according to one of the preceding claims, **characterized in that** the optical sensors in each group are placed at maximum distance from the neutral axis.

8. System according to any one of the preceding claims, **characterized in that** each of said optical sensors is in a respective fiber optic cable, in particular said cables are connected to form an optical fiber chain, said optical fiber chain being connected to the optical interrogator machine (M) with an optical connector, preferably said fiber optic cables being connectable to the machine interrogative optical (M) with a corresponding optical connector.

9. System according to any one of the preceding claims, **characterized in that** the optical sensors are made using a fiber optic cable portion that is modified so that said fiber optic cable portion has a different refractive index from the rest of the fiber optic cable.

10. Method for measuring and monitoring strains of a two- or tri-dimensional object subjected to one or more external forces using the system in any one of the preceding claims, which method comprises the following steps:
a) providing at least one group of optical sensors comprising at least one number of sensors equals to the number of dimensions of said object to be applied on said object in at least one optical fiber cable;
b) placing and gluing said at least one group of optical sensors;
c) connecting said at least one fiber optic cable to an optical interrogator machine (M);
d) sending a light signal from said optical interrogator machine (M) to said at least one fiber optic cable with consequent impact of said light signal with each of the optical sensors of said at least one group;
e) sending a response signal from each of said optical sensors to the optical interrogator machine (M);
f) receiving from the optical interrogator machine (M) said response signals sent from each of said optical sensors;
g) calculating, by said optical interrogator machine (M), the measure of strain defined as the difference of the value of the wavelength of each optical sensor after deformation of the object and the calibration value of the same optical sensor, i.e. the value of the wavelength of the optical sensor fixed at the time of fixing the fiber optic cable on the object;
h) sending the measure of strain to a computer (C) connected to said optical interrogator machine (M);
i) calculating the strain of said object by said computer (C) with respect to the each external force application axis on said object;
**characterized in that**
said at least a group of optical sensors is to be applied and glued on said object according to a predetermined geometric configuration; at least two optical sensors being to be placed and glued on the same plane; and
**in that**
each of said optical sensors is to be positioned distant from a neutral axis of said object; said neutral axis being the axis along which a force applied to said object has no deformation effect on said optical sensors, and
**in that**
said predetermined geometric configuration being chosen in such a way that a plane passing through said neutral axis of said object passes between said two optical sensors.

11. Method according to previous claim, **characterized in that**, when the object is three-dimensional, step a) provides application of at least a group of three optical sensors (S1, S2, S3), particularly application on said object of a plurality of groups of three optical sensors (S1, S2, S3).

12. Method according to claim 11, **characterized in that** step a) provides application of at least a further optical sensor (S1, S2, S3) for each group on said object.

13. Method according to claim 10 or 11, **characterized in that** step b) of said method provides positioning and gluing of each group of three optical sensors (S1, S2, S3) on said object according to a triangular geometrical arrangement, each group on a relevant reference plane.

14. Method according to claim 11 or 12, **characterized in that** step b) provides positioning and gluing for each group of at least a further optical sensor (S4) on a plane orthogonal with respect to each reference plane and inclined with respect to the object torsion plane, preferably with a 45° angle.

15. Method according to previous claim, **characterized in that** when the object is a two-dimensional one, then step a) comprises the application of at least a group of two optical sensors (S5, S6) on a first surface of said object.

16. Method according to claim 15, **characterized in that** step a) comprises one or more groups of at least two optical sensors (S5', S6') on the second surface, opposed with respect to the first surface.

17. Method according to one of claims 15 - 16, **characterized in that** step a) provides at least a further sensor (S7) for each group of optical sensors.

18. Method according to one of claims 15 - 16, **characterized in that** step b) provides positioning and gluing each group of at least two optical sensors (S5, S6) on said first surface according to a substantially L-shaped arrangement, wherein said at least two optical sensors (S5, S6) are positioned at free ends of the two arms of said L shape.

19. Method according to one of claims 16 - 17, **characterized in that** step b) provides positioning and gluing one or more group of at least two optical sensors (S5', S6') on said first surface according to a substantially L-shaped arrangement; said at least two optical sensors (S5', S6') being positioned at free ends of the two arms of said L shape, and each group of at least two optical sensors (S5', S6') being a mirror image with respect to a relevant group of at least two sensors (S5', S6') on the first surface of the object.

20. Method according to one of claims 15 - 19, **characterized in that** step b) provides positioning and gluing of at least a further sensor on said first surface or on said second surface where arms of said L shape meet, preferably 45° inclined with respect to said axis.

## Patentansprüche

1. System zum Messen und Überwachen von Dehnungen eines zwei- oder dreidimensionalen Objekts, umfassend:
- mindestens eine Gruppe von optischen Sensoren, wobei jeder der optischen Sensoren in mindestens einem faseroptischen Kabel vorgesehen ist,
- eine optische Abfragemaschine (M) zum Erzeugen eines Lichtsignals mit einer gegebenen Frequenz, das in dem mindestens einen faseroptischen Kabel gesendet werden soll, und zum Empfangen von Antwortsignalen von den optischen Sensoren und zum Bestimmen der Wellenlängenverschiebung der optischen Sensoren aus ihrem Sollwert oder Kalibrierwert, der zum Zeitpunkt der Befestigung des faseroptischen Kabels am Objekt selbst bestimmt wird, wenn es sich im Ruhezustand befindet, d.h. wenn das Objekt keiner äußeren Kraft ausgesetzt ist; und
- einen Computer (C) zum Berechnen der Dehnung des Objekts in Bezug auf mindestens eine von zwei oder drei Referenzachsen X, Y und Z; wobei der Computer (C) mit der Abfragemaschine (M) verbindbar ist und Daten bezüglich der Wellenlänge der Verschiebung jedes der optischen Sensoren in Bezug auf ihre Kalibrierungswerte empfängt;
**dadurch gekennzeichnet, dass**
die mindestens eine Gruppe von optischen Sensoren gemäß einer vorbestimmten geometrischen Konfiguration auf dem Objekt angebracht werden soll, wobei die mindestens eine Gruppe eine Anzahl von Sensoren umfasst, die mindestens gleich der Anzahl der Dimensionen des Objekts ist; wobei mindestens zwei optische Sensoren auf derselben Ebene angeordnet werden sollen, und
dadurch, dass
jeder der optischen Sensoren von einer neutralen Achse des Objekts entfernt ist, wobei die neutrale Achse die Achse ist, entlang derer eine auf das Objekt ausgeübte Kraft keinen Verformungseffekt auf die optischen Sensoren hat, und
dadurch, dass
die vorbestimmte geometrische Konfiguration so gewählt ist, dass eine Ebene, die durch die neutrale Achse des Objekts verläuft, zwischen den beiden optischen Sensoren verläuft.

2. System nach Anspruch 1, **dadurch gekennzeichnet, dass**, wenn das Objekt dreidimensional ist, die mindestens eine Gruppe von optischen Sensoren mindestens drei optische Sensoren (S1, S2, S3), die auf dem Objekt angebracht sind, so dass sie auf einer gleichen Bezugsebene eine dreieckige Form bilden, insbesondere eine Vielzahl von Gruppen von mindestens drei optischen Sensoren (S1, S2, S3), von denen jeder auf einer jeweiligen Bezugsebene angeordnet ist, umfasst.

3. System nach Anspruch 2, **dadurch gekennzeichnet, dass** jede Gruppe ferner mindestens einen weiteren optischen Sensor (S4) umfasst, der in einer Ebene senkrecht zur Bezugsebene jeder Gruppe von mindestens drei optischen Sensoren (S1, S2, S3) angebracht ist und in Bezug auf die Objekttorsionsachse, vorzugsweise um 45° in Bezug auf diese Achse, geneigt ist.

4. System nach Anspruch 1, **dadurch gekennzeichnet, dass**, wenn das Objekt zweidimensional ist, die mindestens eine Gruppe optischer Sensoren mindestens zwei optische Sensoren (S5, S6) umfasst; wobei die mindestens zwei optischen Sensoren (S5, S6) auf einer ersten Objektoberfläche angebracht sind, wobei jeder am freien Ende der Arme einer imaginären Linie, die im Wesentlichen L-förmig ist, vorgesehen ist, insbesondere eine Vielzahl von Gruppen von mindestens zwei optischen Sensoren (S5, S6) auf der ersten Oberfläche vorgesehen ist.

5. System nach Anspruch 4, **dadurch gekennzeichnet, dass** für jede Gruppe von zwei optischen Sensoren (S5, S6) mindestens ein weiterer optischer Sensor (S7) vorgesehen ist, der an der Verbindungsstelle zwischen den beiden Zweigen der Linie so angeordnet ist, dass er in Bezug auf die Objekttorsionsachse, vorzugsweise um 45° in Bezug auf diese Achse, geneigt ist.

6. System nach einem der Ansprüche 3 - 5, **dadurch gekennzeichnet, dass** auf der zweiten Oberfläche des Objekts, gegenüber der ersten Oberfläche, auf der mindestens eine erste Gruppe von optischen Sensoren (S5, S6) vorgesehen ist, mindestens eine erste Gruppe von mindestens zwei optischen Sensoren (S5', S6') vorgesehen ist; wobei die mindestens zwei optischen Sensoren (S5', S6') an dem freien Ende jedes Arms einer imaginären Linie, die im Wesentlichen L-förmig ist, angebracht sind, so dass jeder optische Sensor (S5', S6') der mindestens einen Gruppe auf der zweiten Oberfläche ein Spiegelbild eines jeweiligen optischen Sensors (S5, S6) der mindestens einen Gruppe auf der ersten Oberfläche des Objekts ist.

7. System nach einem der vorstehenden Ansprüche, **dadurch gekennzeichnet, dass** die optischen Sensoren in jeder Gruppe in maximalem Abstand von der neutralen Achse angeordnet sind.

8. System nach einem der vorstehenden Ansprüche, **dadurch gekennzeichnet, dass** jeder der optischen Sensoren in einem jeweiligen Lichtwellenleiterkabel ist, wobei insbesondere die Kabel zur Bildung einer Lichtwellenleiterkette verbunden sind, wobei die Lichtwellenleiterkette mit einem optischen Verbinder mit der optischen Abfragemaschine (M) verbunden ist, wobei vorzugsweise die Lichtwellenleiterkabel mit der optischen Abfragemaschine (M) mit einem entsprechenden optischen Verbinder verbindbar sind.

9. System nach einem der vorstehenden Ansprüche, **dadurch gekennzeichnet, dass** die optischen Sensoren unter Verwendung eines faseroptischen Kabelabschnitts hergestellt werden, der so modifiziert ist, dass der faseroptische Kabelabschnitt einen anderen Brechungsindex als der Rest des faseroptischen Kabels aufweist.

10. Verfahren zum Messen und Überwachen von Dehnungen eines zwei- oder dreidimensionalen Objekts, das einer oder mehreren äußeren Kräften ausgesetzt ist, unter Verwendung des Systems nach einem der vorhergehenden Ansprüche, wobei das Verfahren die folgenden Schritte umfasst:
a) Bereitstellen mindestens einer Gruppe von optischen Sensoren, die mindestens eine Anzahl von Sensoren umfasst, die gleich der Anzahl der Dimensionen des Objekts ist, welche auf das Objekt in mindestens einem optischen Faserkabel angebracht werden sollen;
b) Platzieren und Verkleben der mindestens einen Gruppe von optischen Sensoren;
c) Verbinden des mindestens einen faseroptischen Kabels mit einer optischen Abfragemaschine (M);
d) Senden eines Lichtsignals von der optischen Abfragemaschine (M) zu dem mindestens einen faseroptischen Kabel mit anschließender Wirkung des Lichtsignals auf jeden der optischen Sensoren der mindestens einen Gruppe;
e) Senden eines Antwortsignals von jedem der optischen Sensoren an die optische Abfragemaschine (M);
f) Empfangen der von jedem der optischen Sensoren gesendeten Antwortsignale von der optischen Abfragemaschine (M);
g) Berechnen, durch die optische Abfragemaschine (M), des Ausmaßes der Dehnung, definiert als die Differenz des Wertes der Wellenlänge jedes optischen Sensors nach Verformung des Objekts und des Kalibrierwertes des gleichen optischen Sensors, d.h. der Wert der Wellenlänge des optischen Sensors, der zum Zeitpunkt der Befestigung des faseroptischen Kabels auf dem Objekt fixiert ist;
h) Senden des Ausmaßes der Dehnung an einen Computer (C), der mit der optischen Abfragemaschine (M) verbunden ist;
i) Berechnen der Dehnung des Objekts durch den Computer (C) in Bezug auf die jeweilige externe Kraftaufbringungsachse auf dem Objekt;
**dadurch gekennzeichnet, dass**
die mindestens eine Gruppe von optischen Sensoren auf das Objekt gemäß einer vorbestimmten geometrischen Konfiguration angebracht und verklebt werden soll; wobei mindestens zwei optische Sensoren auf derselben Ebene angeordnet und verklebt werden sollen; und
dadurch, dass
jeder der optischen Sensoren von einer neutralen Achse des Objekts entfernt positioniert werden soll; wobei die neutrale Achse die Achse ist, entlang derer eine auf das Objekt ausgeübte Kraft keinen Verformungseffekt auf die optischen Sensoren hat, und
dadurch dass
die vorbestimmte geometrische Konfiguration so gewählt ist, dass eine Ebene, die durch die neutrale Achse des Objekts verläuft, zwischen den beiden optischen Sensoren verläuft.

11. Verfahren nach vorstehendem Anspruch, **dadurch gekennzeichnet, dass**, wenn das Objekt dreidimensional ist, Schritt a) die Anwendung mindestens einer Gruppe von drei optischen Sensoren (S1, S2, S3), insbesondere die Anwendung einer Vielzahl von Gruppen von drei optischen Sensoren (S1, S2, S3) auf das Objekt vorsieht.

12. Verfahren nach Anspruch 11, **dadurch gekennzeichnet, dass** Schritt a) die Anwendung mindestens eines weiteren optischen Sensors (S1, S2, S3) für jede Gruppe auf dem Objekt vorsieht.

13. Verfahren nach Anspruch 10 oder 11, **dadurch gekennzeichnet, dass** Schritt b) des Verfahrens das Positionieren und Verkleben jeder Gruppe von drei optischen Sensoren (S1, S2, S3) auf dem Objekt gemäß einer dreieckigen geometrischen Anordnung vorsieht, wobei jede Gruppe auf einer relevanten Bezugsebene liegt.

14. Verfahren nach Anspruch 11 oder 12, **dadurch gekennzeichnet, dass** in Schritt b) für jede Gruppe mindestens ein weiterer optischer Sensor (S4) auf einer zu jeder Bezugsebene orthogonalen und zur Objekttorsionsebene geneigten Ebene, vorzugsweise mit einem Winkel von 45°, positioniert und verklebt wird.

15. Verfahren nach vorstehendem Anspruch, **dadurch gekennzeichnet, dass**, wenn das Objekt ein zweidimensionales ist, Schritt a) die Anwendung von mindestens einer Gruppe von zwei optischen Sensoren (S5, S6) auf einer ersten Oberfläche des Objekts umfasst.

16. Verfahren nach Anspruch 15, **dadurch gekennzeichnet, dass** Schritt a) eine oder mehrere Gruppen von mindestens zwei optischen Sensoren (S5', S6') auf der zweiten Oberfläche umfasst, die der ersten Oberfläche gegenüberliegt.

17. Verfahren nach einem der Ansprüche 15 - 16, **dadurch gekennzeichnet, dass** Schritt a) mindestens einen weiteren Sensor (S7) für jede Gruppe von optischen Sensoren vorsieht.

18. Verfahren nach einem der Ansprüche 15 - 16, **dadurch gekennzeichnet, dass** Schritt b) das Positionieren und Verkleben jeder Gruppe von mindestens zwei optischen Sensoren (S5, S6) auf der ersten Oberfläche gemäß einer im Wesentlichen L-förmigen Anordnung vorsieht, wobei die mindestens zwei optischen Sensoren (S5, S6) an freien Enden der beiden Arme der L-Form positioniert werden.

19. Verfahren nach einem der Ansprüche 16 - 17, **dadurch gekennzeichnet, dass** Schritt b) das Positionieren und Verkleben einer oder mehrerer Gruppen von mindestens zwei optischen Sensoren (S5', S6') auf der ersten Oberfläche gemäß einer im Wesentlichen L-förmigen Anordnung vorsieht; wobei die mindestens zwei optischen Sensoren (S5', S6') an freien Enden der beiden Arme der L-Form positioniert sind und jede Gruppe von mindestens zwei optischen Sensoren (S5', S6') ein Spiegelbild in Bezug auf eine relevante Gruppe von mindestens zwei Sensoren (S5', S6') auf der ersten Oberfläche des Objekts ist.

20. Verfahren nach einem der Ansprüche 15 - 19, **dadurch gekennzeichnet, dass** Schritt b) das Positionieren und Verkleben mindestens eines weiteren Sensors auf der ersten Oberfläche oder auf der zweiten Oberfläche, wo sich die Arme der L-Form treffen, vorzugsweise um 45° in Bezug auf die Achse geneigt, vorsieht.

## Revendications

1. Système pour mesurer et surveiller les contraintes d'un objet bidimensionnel ou tridimensionnel, comprenant :
- au moins un groupe de capteurs optiques, chacun desdits capteurs optiques étant prévu dans au moins un câble de fibre optique,
- une machine d'interrogation optique (M) pour générer un signal lumineux à une fréquence donnée à envoyer dans ledit au moins un câble de fibre optique, et pour recevoir des signaux de réponse desdits capteurs optiques et pour déterminer le déplacement de longueur d'onde desdits capteurs optiques depuis leur valeur nominale ou leur valeur d'étalonnage déterminée au moment de la fixation du câble de fibre optique sur l'objet lui-même lorsqu'il est en condition de repos, c'est-à-dire lorsque ledit objet n'est soumis à aucune force externe ; et
- un ordinateur (C) pour calculer la contrainte de l'objet par rapport à au moins un de deux ou trois axes de référence X, Y et Z; ledit ordinateur (C) pouvant être connecté à ladite machine d'interrogation (M) et recevant des données concernant le déplacement de longueur d'onde de chacun desdits capteurs optiques par rapport à leurs valeurs d'étalonnage ;
**caractérisé en ce que**
ledit au moins un groupe de capteurs optiques doit être appliqué sur ledit objet selon une configuration géométrique prédéterminée, ledit au moins un groupe comprenant un nombre de capteurs au moins égal au nombre de dimensions dudit objet ; au moins deux capteurs optiques devant être placés sur le même plan, et
**en ce que**
chacun desdits capteurs optiques est distant d'un axe neutre dudit objet, ledit axe neutre étant l'axe le long duquel une force appliquée audit objet n'a pas d'effet de déformation sur lesdits capteurs optiques, et
**en ce que**
ladite configuration géométrique prédéterminée étant choisie de sorte qu'un plan passant par ledit axe neutre dudit objet passe entre deux capteurs optiques.

2. Système selon la revendication 1, **caractérisé en ce que** lorsque l'objet est tridimensionnel, ledit au moins un groupe de capteurs optiques comprend
au moins trois capteurs optiques (S1, S2, S3) appliqués sur ledit objet de sorte qu'ils forment sur un même plan de référence une forme triangulaire, en particulier une pluralité de groupes d'au moins trois capteurs optiques (S1, S2, S3), dont chacun est disposé sur un plan de référence respectif.

3. Système selon la revendication 2, **caractérisé en ce que** chaque groupe comprend en outre au moins un autre capteur optique (S4) appliqué dans un plan perpendiculaire au plan de référence de chaque groupe d'au moins trois capteurs optiques (S1, S2, S3) et est incliné par rapport à l'axe de torsion de l'objet, de préférence à 45° par rapport audit axe.

4. Système selon la revendication 1, **caractérisé en ce que** lorsque l'objet est bidimensionnel, ledit au moins un groupe de capteurs optiques comprend au moins deux capteurs optiques (S5, S6) ; lesdits au moins deux capteurs optiques (S5, S6) étant appliqués sur une première surface de l'objet, chacun prévu à l'extrémité libre des bras d'une ligne imaginaire sensiblement en forme de L, en particulier une pluralité de groupes d'au moins deux capteurs optiques (S5, S6) est prévue sur ladite première surface.

5. Système selon la revendication 4, **caractérisé en ce que** pour chaque groupe de deux capteurs optiques (S5, S6) est prévu au moins un autre capteur optique (S7) situé à la jonction entre les deux branches de ladite ligne de manière à être incliné par rapport à l'axe de torsion de l'objet, de préférence à 45° par rapport audit axe.

6. Système selon l'une quelconque des revendications 3 à 5, **caractérisé en ce que** sur la seconde surface de l'objet, en face de ladite première surface sur laquelle au moins un premier groupe de capteurs optiques (S5, S6) est prévu, au moins un premier groupe d'au moins deux capteurs optiques (S5', S6') est prévu ; lesdits au moins deux capteurs optiques (S5', S6') étant appliqués à l'extrémité libre de chaque bras d'une ligne imaginaire sensiblement en forme de L, de sorte que chaque capteur optique (S5', S6') dudit au moins un groupe sur ladite seconde surface est une image en miroir d'un capteur optique respectif (S5, S6) dudit au moins un groupe sur la première surface de l'objet.

7. Système selon l'une des revendications précédentes, **caractérisé en ce que** les capteurs optiques dans chaque groupe sont placés à une distance maximale par rapport à l'axe neutre.

8. Système selon l'une quelconque des revendications précédentes, **caractérisé en ce que** chacun desdits capteurs optiques se trouve dans un câble de fibre optique respectif, en particulier lesdits câbles sont connectés pour former une chaîne de fibre optique, ladite chaîne de fibre optique étant connectée à la machine d'interrogation optique (M) avec un connecteur optique, de préférence lesdits câbles de fibre optique pouvant être connectés à la machine d'interrogation optique (M) avec un connecteur optique correspondant.

9. Système selon l'une quelconque des revendications précédentes, **caractérisé en ce que** les capteurs optiques sont fabriqués en utilisant une portion de câble de fibre optique qui est modifiée de sorte que ladite portion de câble de fibre optique a un indice de réfraction différent du reste du câble de fibre optique.

10. Procédé pour mesurer et surveiller les contraintes d'un objet bidimensionnel ou tridimensionnel soumis à une ou plusieurs forces externes en utilisant le système selon l'une quelconque des revendications précédentes, lequel procédé comprend les étapes suivantes :
a) la fourniture d'au moins un groupe de capteurs optiques comprenant au moins un nombre de capteurs égal au nombre de dimensions dudit objet à appliquer sur ledit objet dans un moins un câble de fibre optique ;
b) le placement et le collage dudit au moins un groupe de capteurs optiques ;
c) la connexion dudit au moins un câble de fibre optique à une machine d'interrogation optique (M) ;
d) l'envoi d'un signal lumineux depuis ladite machine d'interrogation optique (M) audit au moins un câble de fibre optique avec l'impact consécutif dudit signal lumineux sur chacun des capteurs optiques dudit au moins un groupe ;
e) l'envoi d'un signal de réponse depuis chacun desdits capteurs optiques à la machine d'interrogation optique (M) ;
f) la réception de la machine d'interrogation optique (M) desdits signaux de réponse envoyés par chacun desdits capteurs optiques ;
g) le calcul, par ladite machine d'interrogation optique (M), de la mesure de la contrainte définie comme la différence de la valeur de la longueur d'onde de chaque capteur optique après la déformation de l'objet et la valeur d'étalonnage du même capteur optique, c'est-à-dire la valeur de la longueur d'onde du capteur optique fixé au moment de la fixation du câble de fibre optique sur l'objet ;
h) l'envoi de la mesure de la contrainte à un ordinateur (C) connecté à ladite machine d'interrogation optique (M) ;
i) le calcul de la contrainte dudit objet par ledit ordinateur (C) par rapport à l'axe d'application de chaque force externe sur ledit objet ;
**caractérisé en ce que**
ledit au moins un groupe de capteurs optiques doit être appliqué et collé sur ledit objet selon une configuration géométrique prédéterminée ; au moins deux capteurs optiques devant être placés et collés sur le même plan ; et
**en ce que**
chacun desdits capteurs optiques doit être positionné à distance d'un axe neutre dudit objet ; ledit axe neutre étant l'axe le long duquel une force appliquée audit objet n'a pas d'effet de déformation sur lesdits capteurs optiques, et
**en ce que**
ladite configuration géométrique prédéterminée étant choisie de sorte qu'un plan passant par ledit axe neutre dudit objet passe entre lesdits deux capteurs optiques.

11. Procédé selon la revendication précédente, **caractérisé en ce que**, lorsque l'objet est tridimensionnel, l'étape a) prévoit l'application d'au moins un groupe de trois capteurs optiques (S1, S2, S3), en particulier l'application sur ledit objet d'une pluralité de groupes de trois capteurs optiques (S1, S2, S3).

12. Procédé selon la revendication 11, **caractérisé en ce que** l'étape a) prévoit l'application d'au moins un autre capteur optique (S1, S2, S3) pour chaque groupe sur ledit objet.

13. Procédé selon la revendication 10 ou 11, **caractérisé en ce que** l'étape b) dudit procédé prévoit le positionnement et le collage de chaque groupe de trois capteurs optiques (S1, S2, S3) sur ledit objet selon un agencement géométrique triangulaire, chaque groupe sur un plan de référence pertinent.

14. Procédé selon la revendication 11 ou 12, **caractérisé en ce que** l'étape b) prévoit le positionnement et le collage pour chaque groupe d'au moins un autre capteur optique (S4) sur un plan orthogonal par rapport à chaque plan de référence et incliné par rapport au plan de torsion de l'objet, de préférence à un angle de 45°.

15. Procédé selon la revendication précédente, **caractérisé en ce que** lorsque l'objet est un objet bidimensionnel, alors l'étape a) comprend l'application d'au moins un groupe de deux capteurs optiques (S5, S6) sur une première surface dudit objet.

16. Procédé selon la revendication 15, **caractérisé en ce que** l'étape a) comprend un ou plusieurs groupes d'au moins deux capteurs optiques (S5', S6') sur la seconde surface, en face de la première surface.

17. Procédé selon l'une des revendications 15 et 16, **caractérisé en ce que** l'étape a) prévoit au moins un autre capteur (S7) pour chaque groupe de capteurs optiques.

18. Procédé selon l'une des revendications 15 et 16, **caractérisé en ce que** l'étape b) prévoit le positionnement et le collage de chaque groupe d'au moins deux capteurs optiques (S5, S6) sur ladite première surface selon un agencement sensiblement en forme de L, dans lequel au moins deux capteurs optiques (S5, S6) sont positionnés à des extrémités libres des deux bras de ladite forme en L.

19. Procédé selon l'une des revendications 16 et 17, **caractérisé en ce que** l'étape b) prévoit le positionnement et le collage d'un ou plusieurs groupes d'au moins deux capteurs optiques (S5', S6') sur ladite première surface selon un agencement sensiblement en forme de L; lesdits au moins deux capteurs optiques (S5', S6') étant positionnés à des extrémités libres des deux bras de ladite forme en L et chaque groupe d'au moins deux capteurs optiques (S5', S6') étant une image en miroir par rapport à un groupe pertinent d'au moins deux capteurs optiques (S5', S6') sur la première surface de l'objet.

20. Procédé selon l'une des revendications 15 à 19, **caractérisé en ce que** l'étape b) prévoit le positionnement et le collage d'au moins un autre capteur optique sur ladite première surface ou sur ladite seconde surface où les bras de ladite forme en L se rejoignent, de préférence incliné à 45° par rapport audit axe.
